# EUROPÄISCHE PATENTSCHRIFT

(11) **EP 0 890 770 B1**
(45) Veröffentlichungstag und Bekanntmachung des Hinweises auf die Patenterteilung: **04.10.2001**
(21) Anmeldenummer: 98108846.1
(22) Anmeldetag: 15.05.1998
(51) Int. Cl.: F16L 11/15, F16L 25/00, B29C 49/00

(54) **Verbundrohr mit angeformter Rohr-Muffe und Verfahren zu dessen Herstellung**
Composite pipe with integrally formed socket and method of manufacturing the same
Tube composite avec manchon intégrée et méthode pour sa fabrication

(30) Priorität: 09.06.1997 DE 19724113
(43) Veröffentlichungstag der Anmeldung: 13.01.1999
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- EP-A- 0 385 465
- EP-A- 0 563 575
- DE-A- 4 240 268

## Beschreibung

Die Erfindung betrifft ein Verbundrohr mit angeformter Rohr-Muffe nach dem Oberbegriff des Anspruches 1 und ein Verfahren zu dessen Herstellung.

Aus der EP 0 563 575 A2 ist ein derartiges Verbundrohr bekannt. In dem Bereich, in dem eine Rohr-Muffe ausgebildet werden soll, werden die beiden jeweils einen Außen-Schlauch und einen Innen-Schlauch bildenden Kunststoff-Schmelzeströme zusammengeführt, wodurch in-line eine Muffe gebildet wird. Durch gleichzeitige Reduktion der Vorfahrgeschwindigkeit der zur Herstellung des Verbundrohres dienenden Form wird mehr Kunststoff pro Längeneinheit des Rohres in den Bereich der Muffe eingebracht, so daß diese eine größere Scheiteldruckfestigkeit aufweist, als wenn die Kunststoffmenge pro Längeneinheit nicht erhöht worden wäre. In der Muffe sind Innennuten zur Aufnahme von Dichtungsringen ausgebildet.

Aus der EP 0 108 598 B1 ist es bekannt, Verbundrohre in dem Bereich, in dem sie eine Rohr-Muffe aufweisen sollen, mit einem glattwandigen Auβenrohr-Abschnitt und einem glattwandigen Innenrohr-Abschnitt zu versehen, die nicht miteinander verbunden sind. Zur Herstellung einer Muffe wird der Innenrohr-Abschnitt nachträglich herausgeschnitten. Diese Muffe ist nicht formstabil. Dieses Verfahren ist aufwendig und hat sich in der Praxis nicht durchsetzen können.

Aus der EP 0 231 446 B1 (entsprechend US-P 4 779 651) ist ein Verbundrohr mit in-line angeformter Rohr-Muffe bekannt, bei der zum Toleranzausgleich auf den Wellenbergen radial nach innen elastisch verformbare, ringförmige Erhebungen ausgebildet sind. Die Rohr-Muffe ist im Bereich ihres Einführabschnittes mit einer die Ringsteifigkeit verstärkenden Außensicke versehen.

Aus der EP 0 595 742 B1 ist es bekannt, Verbundrohre mittels einer Art von Bajonett-Verschluß miteinander zu verbinden. Jeweils ein Rohrabschnitt ist hierbei mit einer Muffe versehen, die ebenfalls als Verbundrohr ausgebildet ist.

Aus der EP 0 385 465 A2 ist es bekannt, ein Verbundrohr nachträglich durch Aufweiten eines Endes mit einer Rohr-Muffe zu versehen. Die Wellenberge des Außenrohres werden hierbei abgeplattet.

Ein Grundproblem aller an Verbundrohre angeformten Rohr-Muffen liegt darin, daß die Rohr-Muffen nicht immer ausreichend formstabil sind. Dies ist darauf zurückzuführen, daß Verbundrohre ihre Steifigkeit aus dem speziellen Kastenprofil des Verbundrohres und nicht aus der Material-Wanddicke erhalten. Diese Struktur fehlt bei den bekannten angeformten Muffen. Eine geringfügige Verbesserung wird durch die erwähnten Versteifungsrillen im Bereich des Einführabschnitts einer Rohr-Muffe erreicht. Darüber hinaus lassen sich Verbundrohre mit den bekannten Rohr-Muffen mit größeren Nennweiten nicht ohne weiteres herstellen, da Kühlprobleme auftreten. Da mit zunehmender Nennweite der Verbundrohre die Wanddicken konstruktionsbedingt sowohl am Außenrohr als auch am glatten Innenrohr ansteigen, erfolgt bei der in-line-Ausformung einer Muffe nicht mehr eine Abführung der in der Kunststoff-Schmelze gespeicherten Energie sowohl nach außen über die Kokillen als auch nach innen über den gekühlten Kalibrierdorn. Dies gilt deshalb für die Rohr-Muffen, weil der Innen-Schlauch im Bereich der zu erzeugenden Rohr-Muffe keinen Kontakt mehr mit dem Kalibrierdorn hat. Dies führt dazu, daß entweder die Produktionsgeschwindigkeit mit zunehmenden Nennweiten der zu erzeugenden Verbundrohre drastisch gesenkt werden muß oder daß die in-line angeformte Rohr-Muffe nicht exakt und toleranzkonform ausgeformt wird. Insbesondere bei Abwasser- und/oder Regenwasserrohren, an die hohe Anforderungen in bezug auf die Dichtheit einer Muffen-Verbindung gestellt werden, sind diese Nachteile nicht tolerierbar.

Der Erfindung liegt daher die Aufgabe zugrunde, ein Verbundrohr mit einer angeformten Muffe so auszugestalten, daß einerseits eine hohe Formsteifigkeit der Muffe und andererseits eine hohe Toleranzkonstanz im Inneren der Muffe erreicht wird, und ein Verfahren zur Herstellung eines solchen Verbundrohres anzugeben.

Die Aufgabe wird erfindungsgemäß für ein Verbundrohr durch die Merkmale im Kennzeichnungsteil des Anspruches 1 gelöst. Dadurch, daß die Rohr-Muffe über einen Teil ihrer Länge als Verbundrohr-Abschnitt, also mit Wellenbergen und einem Innenrohr-Abschnitt ausgebildet wird, wird die Muffe sehr steif. Der glattwandige und einwandige Abschnitt kann dagegen extrem formgenau und damit mit hoher Toleranzkonstanz hergestellt werden. In diesem Bereich erfolgt die Zentrierung und/oder dichte Verbindung zweier Rohrabschnitte miteinander.

Anspruch 2 gibt die Mindestlänge des glattwandigen und einwandigen Abschnitts an. Anspruch 3 gibt eine Ausgestaltung an, bei der die Zentrierung zwischen einem Spitzende und dem glattwandigen und einwandigen Teil erfolgt. Anspruch 4 gibt an, wie auch noch eine auszugsfeste Steckverbindung in der Rohr-Muffe erreicht werden kann.

Die weiteren Unteransprüche geben weitere vorteilhafte und zum Teil erfinderische Ausgestaltungen wieder.

Weitere Merkmale, Vorteile und Einzelheiten der Erfindung ergeben sich aus der Beschreibung eines Ausführungsbeispiels anhand der Zeichnung.

Es zeigt
- Fig. 1: ein Verbundrohr im Längsschnitt, das fortlaufend aus einem Rohrabschnitt, einer Rohr-Muffe und einem Rohrabschnitt hergestellt wird,
- Fig. 2: eine Rohrverbindung mit einer erfindungsgemäß ausgebildeten Rohr-Muffe,
- Fig. 3: einen Teilausschnitt aus Fig. 2 mit einer abgewandelten Ausführungsform einer Rohr-Muffe,
- Fig. 4: einen Teilausschnitt aus Fig. 2 mit einer weiteren abgewandelten Ausführungsform einer Rohr-Muffe,
- Fig. 5: eine Draufsicht auf eine Vorrichtung zur Herstellung von Kunststoff-Verbundrohren,
- Fig. 6: ein Längsschnitt durch einen Teil der Vorrichtung zu Beginn der Herstellung einer Rohr-Muffe an einem Verbundrohr und
- Fig. 7: eine Darstellung gemäß Fig. 6 am Ende der Herstellung der Rohr-Muffe.

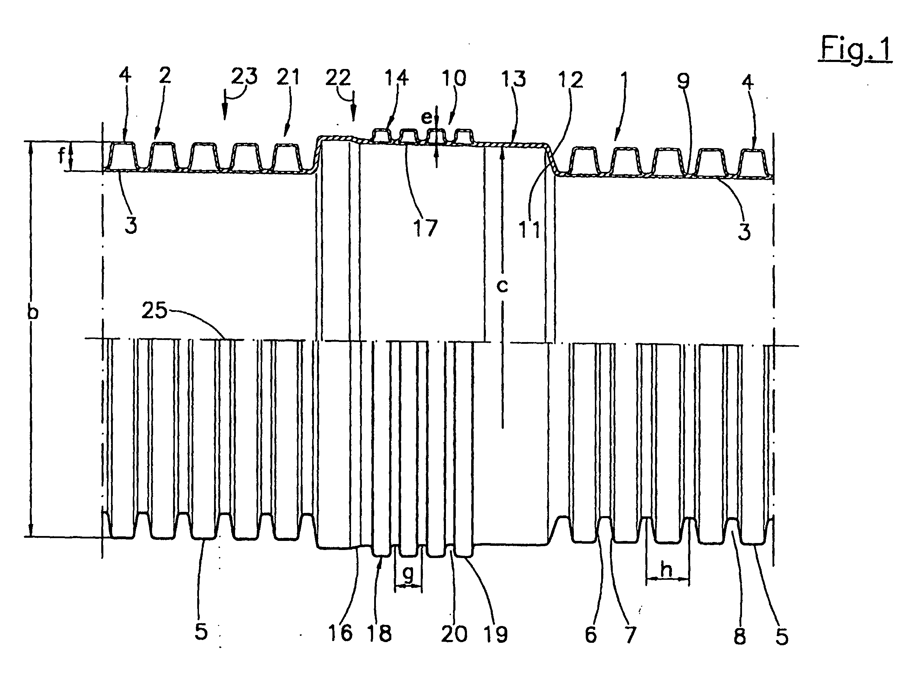

Wie Fig. 1 erkennen läßt, wird ein Verbundrohr fortlaufend in einem Rohrstrang hergestellt, der im wesentlichen aus den eigentlichen Rohrabschnitten 1, 2 besteht. Diese weisen in üblicher Weise ein glattwandiges, zylindrisches Innenrohr 3 und ein gewelltes Außenrohr 4 auf. Dieses Außenrohr weist etwa trapezförmige Wellenberge 5 auf, wobei jeweils zwischen den Flanken 6, 7 zweier benachbarter Wellenberge 5 ein Wellental 8 ausgebildet ist. Am Grund 9 des Wellentals 8 ist das Außenrohr 4 jeweils mit dem Innenrohr 3 verschweißt. Derartige Verbundrohre mit diesem Aufbau sind allgemein bekannt und in der Praxis verbreitet.

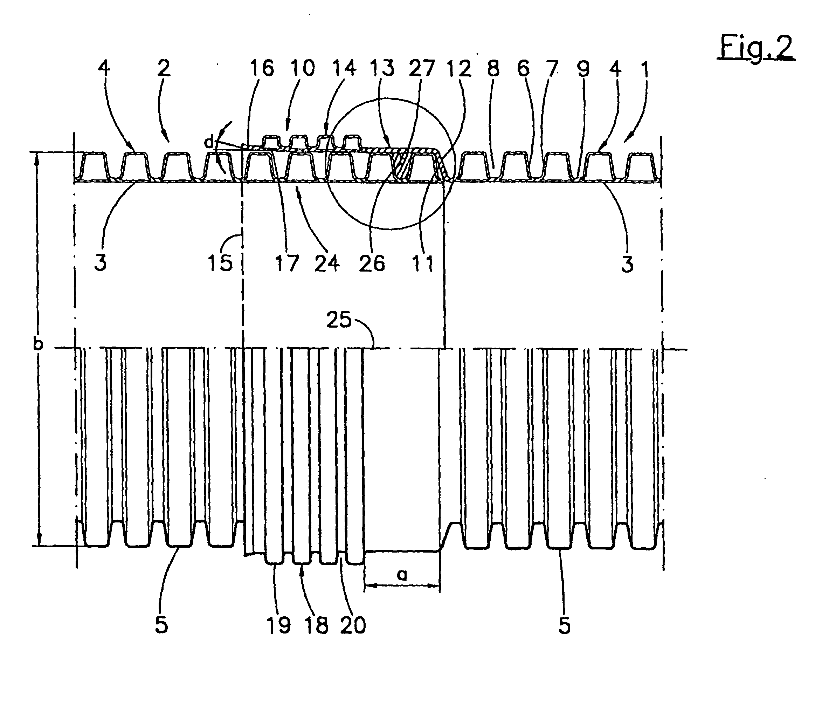

Zwischen den beiden Rohrabschnitten 1, 2 ist eine Rohr-Muffe 10 ausgebildet, die im Bereich des Muffengrundes 11, d.h. anschließend an einen Erweiterungsabschnitt 12 des Rohrabschnitts 1, einen glattwandigen Abschnitt 13 aufweist, der im Ausführungsbeispiel nach den Figuren 1 und 2 zylindrisch ausgebildet ist. Dieser glattwandige Abschnitt 13 ist gleichermaßen wie der Erweiterungsabschnitt 12 nicht doppelwandig, sondern überwiegend einwandig ausgebildet. An den glattwandigen Abschnitt 13 schließt sich wiederum ein Verbundrohr-Abschnitt 14 an. Im Anschluß daran ist die Rohr-Muffe 10 wieder einwandig ausgebildet, und zwar mit einem sich konisch nach außen zur Einführöffnung 15 hin erweiternden Einführabschnitt 16. Der Verbundrohr-Abschnitt 14 ist im Prinzip in gleicher Weise ausgebildet wie die Rohrabschnitte 1 und 2, d.h. er weist einen im wesentlichen zylindrischen Innenrohr-Abschnitt 17 und einen gewellten Außenrohr-Abschnitt 18 mit Wellenbergen 19 auf, wobei der Außenrohr-Abschnitt 18 ebenfalls jeweils im Bereich der Wellentäler 20 mit dem Innenrohr-Abschnitt verschweißt ist. Es sind mindestens zwei - im dargestellten Fall vier - derartige Wellenberge 19 vorgesehen.

Zwischen dem Einführabschnitt 16 und dem Rohrabschnitt 2 befindet sich ein Übergangsabschnitt 21, der durch zwei Sägeschnitte 22, 23 als Abfall herausgeschnitten wird. Wie Fig. 2 entnehmbar ist, dient das in der Zeichnung dargestellte Ende des Rohrabschnitts 2 als Spitzende 24, das in die Rohr-Muffe 10 eines benachbarten Rohrabschnitts 1 eingesetzt wird, wodurch zwei Rohrabschnitte 1, 2 miteinander verbunden werden.

Wie Fig. 2 entnehmbar ist, erstreckt sich der glattwandige Abschnitt 13 der Rohr-Muffe 10 über eine Länge a in Richtung der Mittel-Längs-Achse 25 der Rohrabschnitte 1, 2 und der Rohr-Muffe 10, die gleich oder größer ist als eineinhalb - im dargestellten Fall zwei - einander benachbarte Wellenberge 5 zuzüglich des zwischen ihnen befindlichen Wellentals 8. Hierdurch bedingt ist sichergestellt, daß eine zwischen den beiden Wellenbergen 5 angeordnete Dichtung 26 gegen die Innenwand 27 des Innenrohr-Abschnitts 17 anliegt und daß das Spitzende 24 mit seinen beiden die Dichtung 26 begrenzenden Wellenbergen 5 in dem glattwandigen Abschnitt 13 zentriert ist. Der Außendurchmesser b der Rohrabschnitte 1, 2 ist bei diesem Ausführungsbeispiel nur geringfügig kleiner als der Innendurchmesser c des Abschnitts 13. Es gilt 1,020 ≥ c/b ≥ 1,001. Wie insbesondere aus Fig. 2 hervorgeht, kann sich bei zylindrischer Ausgestaltung des glattwandigen Abschnitts 13 der Innenrohr-Abschnitt 17 des Verbundrohr-Abschnitts 14 vom glattwandigen Abschnitt 13 aus zum Einführabschnitt 16 hin konisch leicht erweitern, und zwar mit einem halben Öffnungswinkel d von 5° - 15°. Die Wellenberge 19 und die Wellentäler 20 des Verbundrohr-Abschnitts 14 der Rohr-Muffe 10 sind kleiner als die Wellenberge 5 und die Wellentäler 8 der Rohrabschnitte 1, 2. Für die Höhe e der Wellenberge 19 radial zur Achse 25, und zwar über dem Innenrohr-Abschnitt 17, im Verhältnis zur Höhe f der Wellenberge 5 radial zur Achse 25, ebenfalls jeweils über dem Innenrohr 3, gilt 0,1 · f ≤ e ≤ 0,6 · f. Für die Teilung g der Wellenberge 19 des Außenrohr-Abschnitts 18 des Verbundrohr-Abschnitts 14 gilt im Verhältnis zur Teilung h der Wellenberge 5 der Rohrabschnitte 1, 2 in Richtung der Achse 25 0,2 · h ≤ g ≤ 0,8 · h, wobei die Teilung jeweils von der Mitte eines Wellentals 8 bzw. 20 bis zur Mitte des benachbarten Wellentals 8 bzw. 20 gemessen wird.

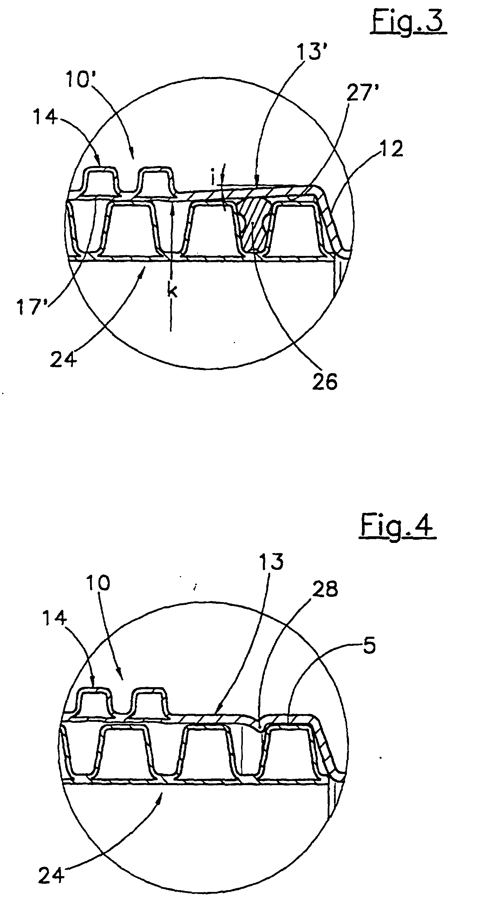

Wie Fig. 3 entnehmbar ist, kann der glattwandige Abschnitt 13' leicht konisch, d.h. kegelstumpfförmig sein, wobei der Abschnitt 13' vom Verbundrohr-Abschnitt 14 zum Erweiterungsabschnitt 12 hin sich mit einem halben Öffnungswinkel i erweitert, für den gilt 0° < i < 5°. In diesem Fall gilt für den kleinsten Innendurchmesser k des Innenrohr-Abschnitts 17' die oben für den Innendurchmesser c des glattwandigen Abschnitts 13 angegebene Beziehung. Die in diesem Fall eingesetzte Dichtung 26 erweitert sich - wie Fig. 3 entnehmbar ist - über den Außenumfang der benachbarten Wellenberge 5 hinaus und liegt gegen die leicht konische Innenwand 27' des Abschnitts 13' an. Durch diese Ausgestaltung wird erreicht, daß die Dichtung selber als Sicherung gegen ein Auseinanderziehen zweier miteinander verbundener Rohrabschnitte 1, 2 dient, da die Dichtung 26' zum Auseinanderziehen der Rohrabschnitte 1, 2 komprimiert werden müßte.

Die Ausgestaltung nach Fig. 4 entspricht im wesentlichen der nach den Figuren 1 und 2, weshalb unter Verwendung der entsprechenden Bezugsziffern auf die obige Beschreibung verwiesen werden kann. In diesem Fall wird keine Dichtung eingesetzt; anstelle dessen ist der glattwandige Abschnitt 13 mit radial zur Achse 25 nach innen vorspringenden Arretiernokken 28 versehen, die z.B. hinter den ersten Wellenbergen 5 des Spitzendes 24 einrasten.

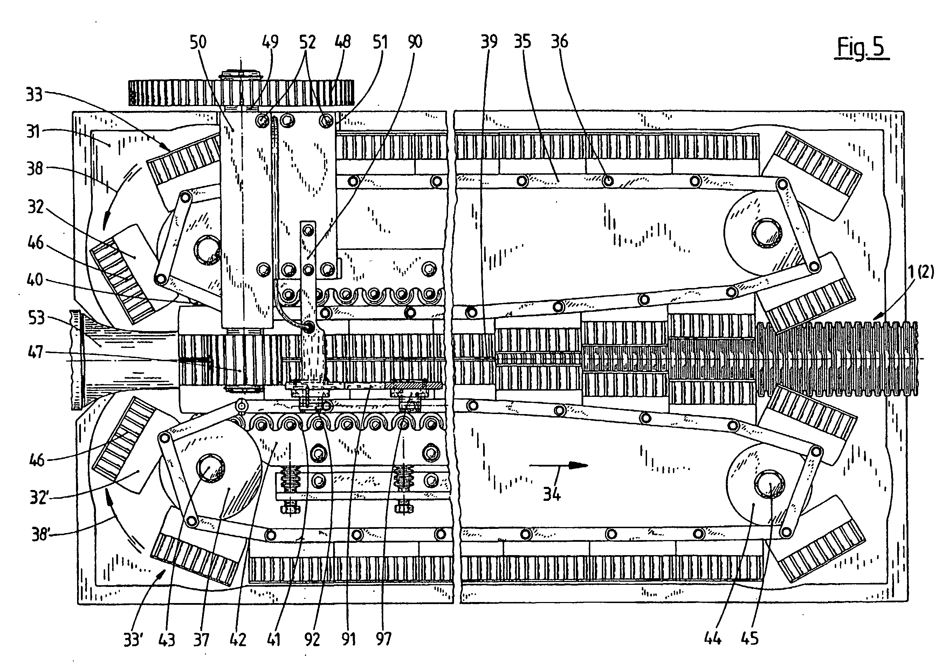

Die Herstellung des Verbundrohres mit der erfindungsgemäß ausgestalteten Rohr-Muffe 10, 10' erfolgt auf einer Vorrichtung, wie sie im Grundprinzip aus der EP 0 563 575 B1 (entsprechend US-P 5 320 797) bekannt ist. Wie Fig. 5 erkennen läßt, weist eine solche Vorrichtung zur Herstellung von Kunststoff-Verbundrohren mit Querrillen einen Maschinentisch 31 auf, auf dem Halbkokillen 32 bzw. 32' angeordnet sind, die jeweils zu zwei sogenannten Ketten 33 bzw. 33' miteinander verbunden sind. Hierzu ist an jeder Halbkokille 32 bzw. 32' in ihrem außenliegenden, in Produktionsrichtung 34 vorderen Bereich eine Lasche 35 mittels eines Anlenkbolzens 36 angelenkt, die an der entsprechenden Stelle der nachfolgenden Halbkokille 32 bzw. 32' ebenfalls mittels eines solchen Anlenkbolzens 6 angebracht ist.

Die so gebildeten Ketten 33, 33' sind an ihrem in Produktionsrichtung 34 gesehen rückwärtigen Ende über als sogenannte Einlaufrollen 37 dienende Umlenkräder geführt. Die einzelnen Halbkokillen 32, 32' werden beim Umlauf der Ketten 33, 33' entsprechend den Umlaufrichtungspfeilen 38 bzw. 38' in eine Formstrecke 39 eingeschwenkt, in der jeweils zwei Halbkokillen 32, 32' zu einem Kokillenpaar vereinigt werden, wobei wiederum in Produktionsrichtung 34 hintereinanderfolgende Kokillenpaare dicht an dicht liegen. Um ein schnelles Schließen der Halbkokillen 32, 32' zu einer parallelen und aneinanderliegenden Stellung zu erreichen, sind sogenannte Schließrollen 40 vorgesehen, die die in Produktionsrichtung 34 hinteren Enden der Halbkokillen 32, 32' beschleunigt zusammenführen.

In der Formstrecke 39 selber werden die aneinanderliegenden Halbkokillen 32, 32' mittels Führungsrollen 41, die in Führungsleisten 42 drehbar gelagert sind, gegeneinander gedrückt. Die Einlaufrollen 37 sind um Achszapfen 43 drehbar am Maschinentisch 31 angebracht. Am in Produktionsrichtung 34 vorderen Ende des Maschinentisches 31 sind ebenfalls als Umlenkräder dienende Rücklaufrollen 44 um Achszapfen 45 drehbar gelagert, um die die Ketten 33 bzw. 33' umgelenkt und zu den Einlaufrollen 37 zurückgeführt werden. Wie Fig. 5 zu entnehmen ist, enden die Führungsleisten 42 mit Führungsrollen 41 schon um die Länge mehrerer Halbkokillen 32 bzw. 32' vor den Rücklaufrollen 44, so daß die Halbkokillen 32 bzw. 32' wieder parallel zueinander und quer zur Produktionsrichtung 34 voneinander wegbewegt werden können, bevor sie von den Rücklaufrollen 44 verschwenkt werden.

An der Oberseite der Halbkokillen 32, 32' ist eine Verzahnung 46 ausgebildet, wobei die beiden Verzahnungen 46 der einander paarweise zugeordneten Halbkokillen 32, 32' miteinander fluchten, so daß von oben ein gemeinsames Antriebsritzel 47 in diese Verzahnung 46 eingreifen kann, das die Halbkokillen 32, 32' in der Formstrecke 39 als geschlossene Form durch die Formstrecke 39 schiebt. Der Antrieb dieses Antriebsritzels 47 erfolgt in üblicher Weise von einem nicht dargestellten Motor über ein Antriebszahnrad 48, das auf einer Welle 49 drehfest befestigt ist, die wiederum das Antriebsritzel 47 trägt. Die Welle 49 ist in einem Lagerbock 50 gelagert, der über Distanzprismen 51 gegenüber dem Maschinentisch 31 abgestützt und mit letzterem mittels Schrauben 52 fest verbunden ist.

Auf der dargestellten Vorrichtung werden die oben bereits beschriebenen Kunststoff-Verbundrohre hergestellt, wovon nur ein Rohrabschnitt 1 bzw. 2 erkennbar ist.

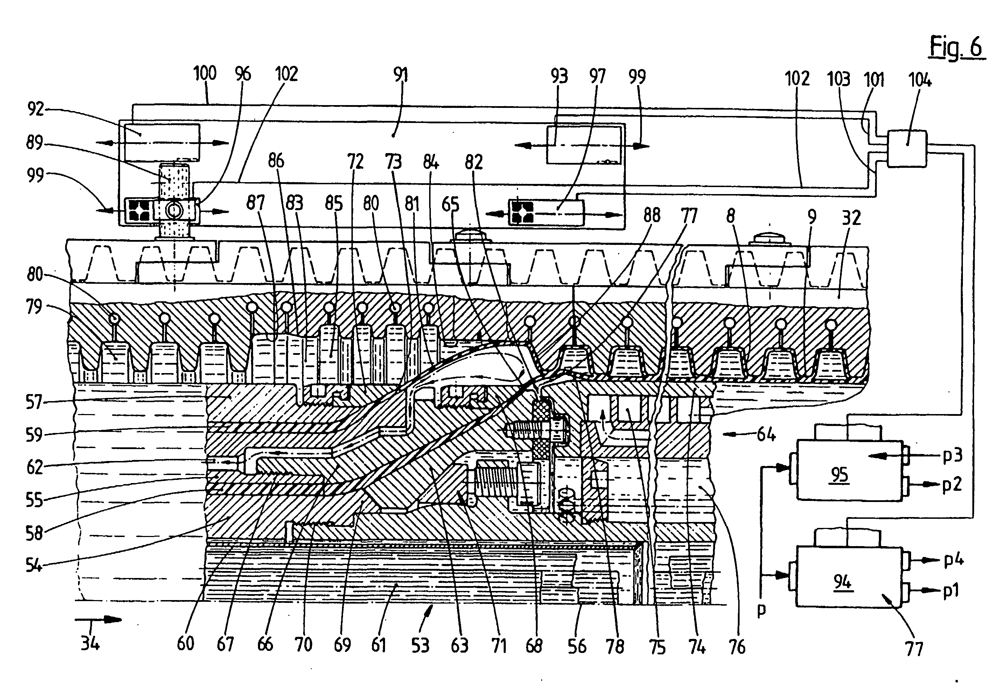

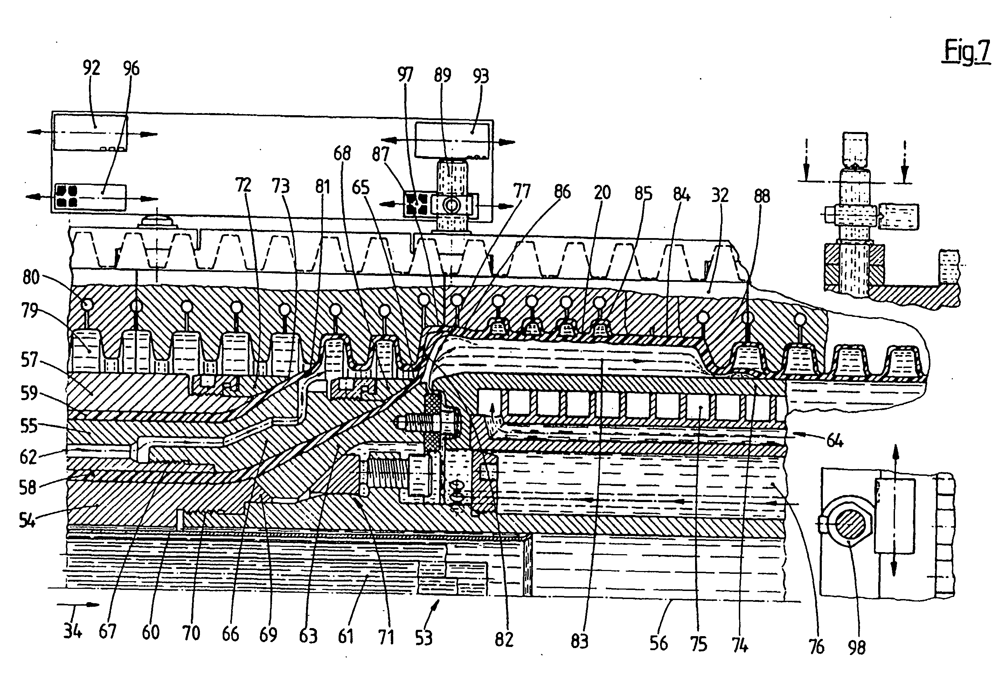

Zur Herstellung der Verbundrohre ist ein Extruder vorgesehen, von dem in Fig. 5 nur ein Spritzkopf 53 angedeutet ist. Gemäß den Figuren 6 und 7 weist der Spritzkopf einen Innendüsen-Dom 54 und einen Außendüsen-Dorn 55 auf. Weiterhin ist - ebenfalls konzentrisch zur gemeinsamen Mittel-Längs-Achse 56 des Spritzkopfes 53 - noch ein Außendüsen-Mantel 57 vorgesehen. Der Innendüsen-Dorn 54 und der Außendüsen-Dorn 55 begrenzen zwischen sich einen Innenkanal 58, während der Außendüsen-Dorn 55 und der Außendüsen-Mantel 57 einen Außen-Kanal 59 zwischen sich begrenzen.

Der Innendüsen-Dorn 54 ist mit einem konzentrisch zur Achse 56 verlaufenden Leitungs-Kanal 60 versehen, durch den Versorgungsschläuche geführt sind, von denen für die vorliegende Beschreibung nur ein Versorgungsschlauch 61 relevant ist. Im Außendüsen-Dorn 55 sind weiterhin Gaskanäle 62 ausgebildet, die sich in Produktionsrichtung 34 erstrecken.

Am Innendüsen-Dorn 54 ist ein sich in Produktionsrichtung 34 kegelstumpfförmig erweiternder Innendorn-Teller 63 angebracht, hinter dem ein als Kalibrierdorn 64 dienender Innendorn angeordnet ist. Dieser Innendorn-Teller 63 begrenzt auf der radial zur Achse 56 innenliegenden Seite eine den Innen-Kanal 58 beendende Innen-Düse 65. Am Außendüsen-Dorn 55 ist ein Verlängerungsteil 66 mittels einer Gewindeverbindung 67 angebracht, das den Innendom-Teller 63 in Produktionsrichtung 34 gesehen teilweise umgibt und so einen erweiterten Bereich des Innen-Kanals 58 auf der Außenseite umgibt, und zwar bis vor die Innen-Düse 65. Diese wird auf der radial außenliegenden Seite mittels eines Innendüsen-Rings 68 begrenzt, der auf dem Verlängerungsteil 66 angeordnet ist und zur Verstellung der Weite der Innen-Düse 65 dient.

Der Innendom-Teller 63 ist auf einem konzentrisch zur Achse 56 verlaufenden Tragrohr 69 angeordnet, das mittels einer Gewindeverbindung 70 mit dem Innendüsen-Dorn 54 verbunden ist. Auf dem Tragrohr 69 ist eine gegen den Innendom-Teller 63 anliegende Justiereinrichtung 71 angebracht, mittels derer der Innendorn-Teller 63 verstellt werden kann. Auf dem Tragrohr 69 ist auch der Kalibrierdorn 64 angebracht.

Auf dem Außendüsen-Mantel 57 ist ein Außendüsen-Ring 72 verstellbar angeordnet, so daß die Weite einer den Außen-Kanal 59 beendenden Außen-Düse 73 verstellt werden kann.

Die Gaskanäle 62 münden zwischen der Außen-Düse 73 und der in Produktionsrichtung 34 nachgeordneten Innen-Düse 65 aus dem Spritzkopf 53 aus.

Der Kalibrierdorn 64 weist einen in üblicher Weise ausgestalteten, im wesentlichen zylindrischen Kalibrierzylinder 74 auf, der an seiner Innenseite mit einem Temperierkanal 75 versehen ist, dem in nicht im einzelnen dargestellter Weise über einen der dargestellten Versorgungsschläuche Temperiermedium zugeführt wird. Der Kalibrierzylinder 74 ist hohl ausgebildet und weist in seinem Innenraum einen das Tragrohr 69 umgebenden Gasraum 76 auf, der mit dem Versorgungsschlauch 61 verbunden ist. Der Gasraum 76 ist über einen in der Trennfläche zwischen dem Innendorn-Teller 63 und dem Kalibrierdorn 64 ausgebildeten Gas-Spalt-Kanal 77 mit dem Formraum 78 verbunden, der zwischen den Halbkokillen 32 bzw. 32' und dem Spritzkopf 53 mit dem Kalibrierdorn 64 ausgebildet ist. Der Gas-Spalt-Kanal 77 mündet - in Produktionsrichtung 34 gesehen - unmittelbar hinter der Innen-Düse 65 in den Formraum 78 ein.

Wie die Figuren 6 und 7 erkennen lassen, sind in den Halbkokillen, von denen in diesen Figuren nur die Halbkokillen 32 dargestellt sind, ringförmige Formausnehmungen 79 ausgebildet, die in bekannter Weise an Teilvakuum-Kanäle 80 angeschlossen sind.

Die vom Extruder zugeführte Kunststoffschmelze strömt zum Teil durch den Außen-Kanal 59 zur Außen-Düse 73, aus der ein Außen-Schlauch 81 extrudiert wird, der sich aufgrund des Teilvakuums in die Formausnehmungen 79 legt. Er bildet nach entsprechender Abkühlung und Erstarrung das gewellte Außenrohr 4.

Ein anderer Teil der Schmelze strömt durch den Innen-Kanal 58 zur Innen-Düse 65, aus der ein weiterer Schlauch, nämlich ein Innen-Schlauch 82, austritt, der auf den Kalibrierzylinder 74 gelangt. Dieser erweitert sich von der Innen-Düse 65 in Produktionsrichtung 34 leicht nach außen, bis der Innen-Schlauch 82 gegen den Grund 9 der Wellentäler 8 des Außen-Schlauches 81 gelangt und hier mit diesen verschweißt wird. Der Innen-Schlauch 82 bildet nach Abkühlung und Erstarrung das Innenrohr 3 des Rohres.

Wie insbesondere aus den Figuren 6 und 7 ersichtlich ist, sind die Halbkokillen 32, 32' so ausgebildet, daß jeweils in vorgegebenen Abständen innerhalb des endlos hergestellten Verbundrohres, also zwischen den Rohrabschnitten 1 und 2, die Rohr-Muffen 10 bzw. 10' ausgebildet werden. Hierzu ist in einem Paar von Halbkokillen 32, 32' eine der Außenform der zu erzeugenden Rohr-Muffe 10 bzw. 10' angepaßte Muffen-Ausnehmung 83 ausgebildet, die also in einem Teilbereich eine glatte, im wesentlichen zylindrische Wand 84 aufweist. An diese Wand 84 schließt sich in Produktionsrichtung 34 eine Reihe von ringförmigen Formausnehmungen 85 an, in denen der Außenrohr-Abschnitt 18 des Verbundrohr-Abschnitts 14 mit seinen Wellenbergen 19 ausgeformt wird. In Produktionsrichtung 34 ist vor den ringförmigen Formausnehmungen 85 ein konischer Abschnitt 86 ausgebildet, in dem der Einführabschnitt 16 der jeweiligen Rohr-Muffe 10 bzw. 10' ausgeformt wird. Daran schließt sich in Produktionsrichtung 34 ein Formabschnitt 87 an, in dem der Übergangsabschnitt 21 zwischen einer Rohr-Muffe 10 bzw. 10' und einem Rohrabschnitt 2 ausgeformt wird.

Entgegen der Produktionsrichtung 34 schließt sich an die Wand 84 der Muffen-Ausnehmung 83 ein Formabschnitt 88 an, der dem Erweiterungsabschnitt 12 zwischen dem Rohrabschnitt 1 und seiner Rohr-Muffe 10 bzw. 10' angepaßt ist.

In einer räumlich festen Zuordnung zu der Muffen-Ausnehmung 83 ist durch eine stabförmige Verlängerung eines Anlenkbolzens 36 ein Schaltglied 89 gebildet, das - in noch zu schildernder Weise - verschiedene Ventile ansteuert, um im Raum zwischen Außen-Schlauch 81 und Innen-Schlauch 82 und/oder innerhalb des Innen-Schlauches 82 unterschiedliche Druckverhältnisse zu schaffen. Hierzu ist z.B. auf dem Lagerbock 50 eine Montagebrücke 90 befestigt, die einen Montagearm 91 aufweist, der sich oberhalb der Halbkokillen 32' in Produktionsrichtung 34 erstreckt. Auf diesem Montagearm 91 sind von dem Schaltglied 89 zu betätigende Schalter 92, 93 angebracht, mittels derer Magnetventile 94, 95 angesteuert werden können. Weiterhin werden mittels des Schaltgliedes 89 auf dem Montagearm 91 angebrachte Schalter 96, 97 betätigt, mittels derer der nicht dargestellte Antriebsmotor auf unterschiedliche Geschwindigkeiten geschaltet werden kann. Die Schalter 92, 93, 96, 97 werden - wie aus den Fig. 6, 7 hervorgeht - berührungslos geschaltet, wobei die berührungslose Betätigung der Schalter 96, 97 mittels eines Schaltnockens 98 erfolgt. Die Schalter 92, 93, 96, 97 sind in Produktionsrichtung 34 auf dem Montagearm 91 einstellbar angebracht, was durch Pfeile 99 angedeutet ist. Die Schalter 92, 93, 96, 97 sind über Leitungen 100, 101, 102, 103 mit einer Steuereinrichtung 104 verbunden, die die von den Schaltern 92, 93, 96, 97 kommenden Signale verarbeitet und entsprechende Steuersignale auf die Magnetventile 94, 95 gibt. Die Magnetventile 94, 95 werden von einer nicht dargestellten Druckquelle mit Druckluft mit einem Druck p versorgt, der höher ist als die nachfolgend noch zu erläuternden Ausgangsdrücke der Magnetventile 94, 95.

Über das Magnetventil 94 wird der Druck im Gas-Spalt-Kanal 77 und damit innerhalb des Innen-Schlauches 82 angesteuert, während durch das Magnetventil 95 der Druck in den Gaskanälen 62 und damit im Raum zwischen Außen-Schlauch 81 und Innen-Schlauch 82 angesteuert wird.

Während der Produktion des normalen gewellten Verbundrohres in der in Fig 6 rechts dargestellten Form wird durch das Magnetventil 94 ein Druck p1 von ca. 105 bis 135 kPa (1,05 bis 1,35 bar), also ein geringer Überdruck von 5 bis 35 kPa (0,05 bis 0,35 bar), auf den Gas-Spalt-Kanal 77 gegeben. Gleichzeitig wird auf die Gaskanäle 62 ein Druck p2 von ca. 120 bis 150 kPa (1,2 bis 1,5 bar), also ein ebenfalls geringer aber höherer Überdruck von 20 bis 50 kPa (0,2 bis 0,5 bar), gegeben. Durch den etwas höheren Überdruck zwischen Außen-Schlauch 81 und Innen-Schlauch 82 wird sichergestellt, daß beim Abkühlen der an den Wellentälern 8 miteinander verschweißten Schläuche 81, 82 zum gewellten Verbundrohr der Innen-Schlauch 82 theoretisch nach außen ausgewölbt wird. Beim Abkühlen der Schläuche 81, 82, auf Umgebungstemperatur stellt sich exakt Atmosphärendruck ein.

Wenn in dem in Fig. 6 dargestellten Augenblick der Form-Abschnitt 87 in den Bereich des Gas-Spalt-Kanals 77 kommt, gelangt das Schaltglied 89 zum - in Produktionsrichtung 34 gesehen - ersten Schalter 96, der die Vorschubgeschwindigkeit der durch die Halbkokillen 32, 32' gebildeten Form reduziert, so daß - bei gleicher Leistung des Extruders - der Innen-Düse 65 und der Außen-Düse 73 mehr Schmelze pro Längeneinheit des zu erzeugenden Verbundrohres zugeführt wird. Dies führt dazu, daß der Außen-Schlauch 81 und der Innen-Schlauch 82 dicker werden, wie insbesondere Fig. 7 entnehmbar ist. Gleichzeitig wird das Magnetventil 95 mit der Atmosphäre bzw. einer Vakuumpumpe verbunden, so daß im Raum zwischen Außen-Schlauch 81 und Innen-Schlauch 82 Atmosphärendruck bzw. Unterdruck p3 herrscht und die Luft gezielt entweichen kann. Gleichzeitig wird das Magnetventil 94 umgeschaltet von p1 auf einen höheren Druck p4 von ca. 110 bis 145 kPa (1,1 bis 1,45 bar), also auf einen Überdruck gegenüber Atmosphärendruck von ca. 10 bis 45 kPa (0,1 bis 0,45 bar). Hierdurch wird der Innen-Schlauch 82 nach außen gegen den Außen-Schlauch 81 gedrückt. Dieser wird ohnehin durch das Teilvakuum von etwa 70 bis 30 kPa (0,7 bis 0,3 bar) in den Teilvakuum-Kanälen 80 gegen die Muffen-Ausnehmung 83 gezogen. Von innen drückt der durch den Gas-Spalt-Kanal 77 eingedrückte Überdruck, so daß Außen-Schlauch 81 und Innen-Schlauch 82 an dem Formabschnitt 87 und dem konischen Abschnitt 86 der Muffen-Ausnehmung 83 anliegend vollflächig miteinander verschweißt werden. Wenn beim Vorrücken der Halbkokillen 32, 32' in Produktionsrichtung 34 deren ringförmige Formausnehmungen 85 in den Bereich der Außen-Düse 73 kommen, dann wird der Außen-Schlauch 81 aufgrund des auch dort herrschenden Teilvakuums von dem im Raum zwischen Außen-Schlauch 81 und Innen-Schlauch 82 herrschenden Atmosphärendruck p3 in diese Formausnehmungen 85 gedrückt, wodurch die Wellenberge 19 des Verbundrohr-Abschnitts 14 der Rohr-Muffe 10 bzw. 10' geformt werden. Der Innen-Schlauch 82 wird nur teilweise in diese Formausnehmungen 85 hineingedrückt, da immer dann, wenn der Innen-Schlauch 82 ein Wellental 20 erreicht, die Luft aus dem Raum zwischen Außen-Schlauch 81 und Innen-Schlauch 82 nicht vollständig entweichen kann, bzw. der Druck p4 so gewählt wird, daß der Innen-Schlauch 82 nicht vollständig in die Formausnehmungen 85 hineingedrückt wird. Im Bereich dieser Formausnehmungen 85 ist daher der Innen-Schlauch 82 und damit auch später der Innenrohr-Abschnitt 17 bzw. 17' nicht exakt glattwandig; die geschilderte Verbundrohr-Ausgestaltung, d.h. das Kastenprofil, wird aber erreicht. Daß dieser Innenrohr-Abschnitt 17 bzw. 17' nicht exakt glattwandig ist, spielt keine Rolle, da die Zentrierung und/oder Abdichtung im Bereich des glattwandigen Abschnitts 13 bzw. 13' erfolgt. Wenn die zu dessen Ausbildung vorgesehene glatte Wand 84 der Muffen-Ausnehmung 83 in den Bereich der Außen-Düse 73 gelangt, dann wird von da ab der glattwandige Abschnitt 13 bzw. 13' der Rohr-Muffe 10 bzw. 10' in der Weise hergestellt, wie es bereits für den Einführabschnitt 16 geschildert wurde.

Am Ende der Herstellung der Rohr-Muffe 10, 10' gemäß Fig. 7 gelangt das Schaltglied 89 zuerst zu dem Schalter 97, der den Antriebsmotor wieder auf eine höhere Geschwindigkeit umschaltet, so daß pro Längeneinheit des produzierten Verbundrohres wieder weniger Schmelze zugeführt wird. Unmittelbar danach wird der Schalter 93 betätigt, der die Magnetventile 94 und 95 wieder auf die vorstehend geschilderten Bedingungen mit den Drücken p1 und p2 zurückschaltet. Der im Formabschnitt 87 erzeugte Übergangsabschnitt 21 wird herausgeschnitten.

Die vorstehenden Druckverhältnisse wurden für PVC (Polyvinylchlorid) als Werkstoff für das zu erzeugende Rohr angegeben. Bei anderen Werkstoffen, insbesondere Polyolefinen, können sich diese Druckverhältnisse ändern. Des weiteren ist es nicht in allen Anwendungsfällen notwendig oder sinnvoll, bei der Erzeugung der Rohr-Muffe 10 bzw. 10' durch Reduktion der Transportgeschwindigkeit der Form die Schmelzezufuhr zu erhöhen.

## Patentansprüche

1. Verbundrohr
- mit einem glatten Innenrohr (3),
- mit einem abwechselnd mit ringförmigen Wellenbergen (5) und ringförmigen Wellentälern (8) versehenen Außenrohr (4), wobei das Innenrohr (3) mit dem Außenrohr (4) am Grund (9) der Wellentäler (8) unter Bildung eines Rohrabschnitts (1, 2) verschweißt ist, und
- mit einer an einem Ende eines Rohrabschnitts (1) ausgebildeten Rohr-Muffe (10, 10'), die
-- an ihrem Grund mit einem Erweiterungsabschnitt (12) an das Innenrohr (3) und das Außenrohr (4) des Rohrabschnitts (1) anschließt,
-- anschließend an den Erweiterungsabschnitt (12) einen glattwandigen und im wesentlichen einwandigen Abschnitt (13, 13') aufweist,
-- anschließend an den glattwandigen Abschnitt (13, 13') einen gewellten Abschnitt aufweist und
-- anschließend an den gewellten Abschntt eine Einführöffnung (15) aufweist,
**dadurch gekennzeichnet,**
**daß** der gewellte Abschnitt als Verbundrohr-Abschnitt (14) mit einem glattwandigen Innenrohr-Abschnitt (17, 17') und einem Außenrohr-Abschnitt (18) mit mindestens zwei ringförmigen Wellenbergen (19) ausgebildet ist.

2. Verbundrohr nach Anspruch 1, **dadurch gekennzeichnet,**
**daß** der glattwandige und im wesentlichen einwandige Abschnitt (13, 13') eine Länge (a) in Richtung der Mittel-Längs-Achse (25) hat, die mindestens der Erstreckung von eineinhalb Wellenbergen (5) und einem Wellental (8) des Rohrabschnitts (1, 2) in Richtung der Mittel-Längs-Achse (25) entspricht.

3. Verbundrohr nach Anspruch 1 oder 2,
wobei der glattwandige und einwandige Abschnitt (13) zylindrisch ausgebildet ist.

4. Verbundrohr nach Anspruch 1 oder 2,
wobei der glattwandige und einwandige Abschnitt (13') sich vom Verbundrohr-Abschnitt (14) zum Erweiterungsabschnitt (12) konisch erweitert.

5. Verbundrohr nach Anspruch 4,
wobei der glattwandige und einwandige Abschnitt (13') sich mit einem halben Öffnungswinkel (i) konisch erweitert, für den gilt 0°<i<5°.

6. Verbundrohr nach Anspruch 3,
wobei der Innenrohr-Abschnitt (17) des Verbundrohr-Abschnitts (14) sich in Richtung zur Einführöffnung (15) konisch erweitert.

7. Verbundrohr nach einem der Ansprüche 1 bis 6,
wobei für die Höhe (e) der Wellenberge (19) des Verbundrohr-Abschnitts (14) der Rohr-Muffe (10, 10') im Verhältnis zu der Höhe (f) der Wellenberge (5) der Rohrabschnitte (1, 2) gilt 0,1 f ≤ e ≤ 0,6 f.

8. Verbundrohr nach einem der Ansprüche 1 bis 7,
wobei für die Teilung (g) der Wellenberge (19) des Verbundrohr-Abschnitts (14) im Vergleich zu der Teilung (h) der Wellenberge (5) der Rohrabschnitte (1, 2) gilt 0,2 · h≤g≤ 0,8 · h.

9. Verbundrohr nach einem der Ansprüche 1 bis 8,
wobei für den kleinsten Innendurchmesser (c) des glattwandigen und einwandigen Abschnitts (13, 13') im Verhältnis zum Außendurchmesser (b) der Rohrabschnitte (1, 2) gilt 1,020 ≥ c/b ≥ 1,001.

10. Verbundrohr nach einem der Ansprüche 1 bis 9,
wobei die Rohr-Muffe (10, 10') in-line mit den Rohrabschnitten (1, 2) ausgebildet ist.

11. Verbundrohr nach einem der Ansprüche 1 bis 10,
wobei im glattwandigen und einwandigen Abschnitt (13) mindestens ein nach innen gerichteter Arretiernocken (28) ausgebildet ist.

12. Verbundrohr nach einem der Ansprüche 1 bis 11,
wobei zwischen dem Verbundrohr-Abschnitt (14) und der Einführöffnung (15) ein Einführabschnitt (16) ausgebildet ist.

13. Verfahren zur Herstellung eines Verbundrohres nach einem der Ansprüche 1 bis 12,
wobei die Rohr-Muffe bei der fortlaufenden Herstellung der Rohrabschnitte (1,2) ausgeformt wird.

## Claims

1. A composite pipe comprising
- a smooth internal pipe (3),
- an external pipe (4) alternately provided with annular corrugation crests (5) and annular corrugation troughs (8), the internal pipe (3) and the external pipe (4) being welded together at the bottom (9) of the corrugation troughs (8), forming a pipe section (1, 2), and
- a socket (10, 10') which is formed at one end of a pipe section (1) and which
-- at its bottom, adjoins the internal pipe (3) and the external pipe (4) of the pipe section (1) by an expanded section (12),
-- subsequent to the expanded section (12), comprises a smooth-walled and substantially single-walled section (13, 13'),
-- subsequent to the smooth-walled section (13,13'), comprises a corrugated section and
-- subsequent to the corrugated section comprises an inlet (15),
**characterized in**
**that** the corrugated section is formed as a composite pipe section (14) with a smooth-walled section (17, 17') and an external pipe section (18) having at least two annular corrugation crests (19).

2. A composite pipe according to claim 1, **characterized in**
**that** the smooth-walled and substantially single-walled section (13, 13') has a length (a) in the direction of the central longitudinal axis (25) which corresponds at least to the length of one and a half corrugation crests (5) and a corrugation trough (8) of the pipe section (1, 2) in the direction of the central longitudinal axis (25).

3. A composite pipe according to claim 1 or 2,
wherein the smooth-walled and single-walled section (13) is cylindrical.

4. A composite pipe according to claim 1 or 2,
wherein the smooth-walled and single-walled section (13') widens conically from the composite pipe section (14) to the expanded section (12).

5. A composite pipe according to claim 4,
wherein the smooth-walled and single-walled section (13') widens conically by half an aperture angle (i) to which 0° < i < 5° applies.

6. A composite pipe according to claim 3,
wherein the internal pipe section (17) of the composite pipe section (14) widens conically in the direction towards the inlet (15).

7. A composite pipe according to one of claims 1 to 6,
wherein 0.1 f ≤ e ≤ 0.6 f applies to the height (e) of the corrugation crests (19) of the composite pipe section (14) of the socket (10, 10') in relation to the height (f) of the corrugation crests (5) of the pipe sections (1, 2).

8. A composite pipe according to one of claims 1 to 7,
wherein 0.2 h ≤ g ≤ 0.8 h applies to the spacing (g) of the corrugation crests (19) of the composite pipe section (14) in relation to the spacing (h) of the corrugation crests (5) of the pipe sections (1,2).

9. A composite pipe according to one of claims 1 to 8,
wherein 1.020 ≥ c/b ≥ 1.001 applies to the smallest inside diameter (c) of the smooth-walled and single-walled section (13, 13') in relation to the outside diameter (b) of the pipe sections (1, 2).

10. A composite pipe according to one of claims 1 to 9,
wherein the socket (10, 10') is formed in-line with the pipe sections (1, 2).

11. A composite pipe according to one of claims 1 to 10,
wherein at least one catching cam (28) directed inwards is formed in the smooth-walled and single-walled section (13).

12. A composite pipe according to one of claims 1 to 11,
wherein an insertion section (16) is formed between the composite pipe section (14) and the inlet (15).

13. A method for the manufacture of a composite pipe according to one of claims 1 to 12,
wherein the socket is molded during the continuous production of the pipe sections (1,2).

## Revendications

1. Tube composite comportant
- un tube intérieur lisse (3),
- un tube extérieur (4) pourvu en alternance de sommets d'ondulation annulaires (5) et de creux d'ondulation annulaires (8), le tube intérieur (3) étant soudé avec le tube extérieur (4) au fond (9) des creux d'ondulation (8) en formant un tronçon de tube (1, 2), et
- un manchon de tube (10, 10') réalisé à une extrémité d'un tronçon de tube (1), qui
-- se raccorde au niveau son fond par un tronçon évasé (12) au tube intérieur (3) et au tube extérieur (4) du tronçon de tube (1),
-- comprend, à la suite du tronçon évasé (12), un tronçon (13, 13') sensiblement à paroi unique et lisse,
-- comprend, à la suite du tronçon à paroi lisse (13, 13'), un tronçon ondulé, et
-- comprend, à la suite du tronçon ondulé, une ouverture d'introduction (15),
**caractérisé en ce que**
le tronçon ondulé est réalisé sous forme de tronçon de tube composite (14) comportant un tronçon de tube intérieur à paroi lisse (17, 17') et un tronçon de tube extérieur (18) présentant au moins deux sommets d'ondulation annulaires (19).

2. Tube composite selon la revendication 1, **caractérisé en ce que** le tronçon (13, 13') à paroi sensiblement unique et lisse présente une longueur (a) en direction de l'axe longitudinal central (25), qui correspond en extension à au moins un sommet d'ondulation (5) et demi et un creux d'ondulation (8) du tronçon de tube (1, 2) en direction de l'axe longitudinal central (25).

3. Tube composite selon l'une ou l'autre des revendications 1 et 2, dans lequel le tronçon (13) à paroi unique et lisse est réalisé cylindrique.

4. Tube composite selon l'une ou l'autre des revendications 1 et 2, dans lequel le tronçon (13') à paroi unique et lisse va en s'évasant coniquement depuis le tronçon de tube composite (14) jusqu'au tronçon évasé (12).

5. Tube composite selon la revendication 4, dans lequel le tronçon (13') à paroi unique et lisse va en s'évasant coniquement avec un demi-angle d'ouverture (i) qui satisfait la relation 0° < i < 5°.

6. Tube composite selon la revendication 3, dans lequel le tronçon de tube intérieur (17) du tronçon de tube composite (14) va en s'évasant coniquement en direction de l'ouverture d'introduction (15).

7. Tube composite selon l'une quelconque des revendications 1 à 6, dans lequel la relation entre la hauteur (e) des sommets d'ondulation (19) du tronçon de tube composite (14) du manchon de tube (10, 10'), et la hauteur (f) des sommets d'ondulation (5) des tronçons de tube (1, 2) est déterminée par 0,1f ≤ e ≤ 0,6f.

8. Tube composite selon l'une quelconque des revendications 1 à 7, dans lequel la relation entre le pas (g) des sommets d'ondulation (19) du tronçon de tube composite (14) et le pas (h) des sommets d'ondulation (5) des tronçons de tube (1, 2) est déterminée par 0,2 · h ≤ g ≤ 0,8 · h.

9. Tube composite selon l'une quelconque des revendications 1 à 8, dans lequel la relation entre le diamètre minimum (c) du tronçon (13, 13') à paroi unique et lisse et le diamètre extérieur (b) des tronçons de tube (1, 2) est déterminée par 1,020 ≥ c/b ≥ 1,001.

10. Tube composite selon l'une quelconque des revendications 1 à 9, dans lequel le manchon de tube (10, 10') est réalisé en ligne avec les tronçons de tube (1, 2).

11. Tube composite selon l'une quelconque des revendications 1 à 10, dans lequel au moins une came d'arrêt (28) dirigée vers l'intérieur est réalisée dans le tronçon (13) à paroi unique et lisse.

12. Tube composite selon l'une quelconque des revendications 1 à 11, dans lequel un tronçon d'introduction (16) est réalisé entre le tronçon de tube composite (14) et l'ouverture introduction (15).

13. Procédé pour réaliser un tube composite selon l'une quelconque des revendications 1 à 12, dans lequel le manchon de tube est conformé lors de la production continue des tronçons de tube (1, 2).
